# EUROPÄISCHE PATENTSCHRIFT

(11) **EP 2 938 876 B1**
(45) Veröffentlichungstag und Bekanntmachung des Hinweises auf die Patenterteilung: **06.09.2017**
(21) Anmeldenummer: 14777314.7
(22) Anmeldetag: 29.09.2014
(51) Int. Cl.: F02M 63/02

(54) **DRUCKBEGRENZUNGSVENTIL FÜR EIN KRAFTSTOFFEINSPRITZSYSTEM UND KRAFTSTOFFEINSPRITZSYSTEM**
PRESSURE-LIMITING VALVE FOR A FUEL INJECTION SYSTEM AND FUEL INJECTION SYSTEM
SOUPAPE DE LIMITATION DE PRESSION POUR SYSTÈME D'INJECTION DE CARBURANT ET SYSTÈME D'INJECTION DE CARBURANT

(30) Priorität: 15.10.2013 DE 102013220816
(43) Veröffentlichungstag der Anmeldung: 04.11.2015
(73) Patentinhaber: Continental Automotive GmbH, 30165 Hannover (DE)
(72) Erfinder: KLESSE, Christoph, 93086 Wörth an der Donau (DE); RITSCH, Tobias, 93049 Regensburg (DE); WIENCH, Robert, 93092 Barbing (DE); WIRKOWSKI, Michael, 93055 Regensburg (DE)
(86) Internationale Anmeldenummer: PCT/EP2014/070834
(87) Internationale Veröffentlichungsnummer: WO 2015/055411

(56) Entgegenhaltungen:
- EP-A1- 1 411 238
- WO-A1-02/077446
- DE-A1- 19 621 021
- DE-A1-102008 059 638
- US-B1- 7 661 410

## Beschreibung

Die Erfindung betrifft ein Druckbegrenzungsventil für ein Kraftstoffeinspritzsystem, insbesondere für ein Kraftstoffeinspritzsystem für eine Brennkraftmaschine für ein Kraftfahrzeug. Die Erfindung betrifft weiterhin ein Kraftstoffeinspritzsystem mit einem solchen Druckbegrenzungsventil.

Hochdruckpumpen für Kraftstoffeinspritzsysteme weisen herkömmlicherweise ein Druckbegrenzungsventil (auch Überdruckventil oder Pressure Relief Valve genannt) auf. Dies ist meistens so mit der Hochdruckpumpe gekoppelt, dass es hydraulisch verriegelt ist. Hydraulisch verriegelt bedeutet, dass das Druckbegrenzungsventil in einen Pumpenraum der Hochdruckpumpe abführt. Entsprechend ist während des Pumpenförderhubs das Druckbegrenzungsventil hydraulisch verriegelt und kann nicht öffnen. Um Wirkungsgradverluste zu vermeiden, wird der Öffnungsdruck des Druckbegrenzungsventils so eingestellt, dass es bei Normalbetrieb der Brennkraftmaschine nicht öffnet. Im Fehlerfall einer Pumpenvollförderung können Systemdrücke auftreten, die deutlich außerhalb des spezifizierten Hochdruckbereichs liegen. Dies führt beispielsweise dazu, dass die Einspritzventile nicht mehr öffnen können. Ein Betrieb des Kraftfahrzeugs ist nicht mehr möglich oder könnte eine Beschädigung beispielsweise des Katalysators zur Folge haben.

EP 1 411 238 A1 beschreibt ein Druckbegrenzungsventil einer Kraftstoffhochdruckpumpe, das zum Führen einer Feder, welche ein Dichtelement in seine Schließposition vorspannt, einen Stützdorn aufweist, der die Feder an einem seitlichen Ausweichen hindert.

Es ist wünschenswert, ein Druckbegrenzungsventil anzugeben, das auch im Fehlerfall der Hochdruckpumpe zumindest einen minimalen Betrieb des Kraftfahrzeugs zuverlässig ermöglicht. Es ist zudem wünschenswert, ein Kraftstoffeinspritzsystem anzugeben, das auch im Fehlerfall der Hochdruckpumpe zumindest einen minimalen Betrieb des Kraftfahrzeugs zuverlässig ermöglicht.

Gemäß einer Ausführungsform der Erfindung umfasst ein Druckbegrenzungsventil für ein Kraftstoffeinspritzsystem ein Gehäuse, einen Fluideinlass und einen Fluidauslass. Das Druckbegrenzungsventil weist einen Dichtsitz und einen Dichtkörper auf, um einen Fluidfluss vom Fluideinlass zum Fluidauslass in einer Schließposition zu sperren und in weiteren Positionen freizugeben. Das Druckbegrenzungsventil weist eine Haltevorrichtung auf, um den Dichtkörper in einer der weiteren Positionen zu halten, wenn der Dichtkörper mindestens eine vorgegebene Distanz von dem Dichtsitz weg verschoben ist.

Durch die Haltevorrichtung ist es möglich, das Druckbegrenzungsventil dauerhaft offen zu halten und den Fluidfluss vom Fluideinlass zum Fluidauslass dauerhaft freizugeben. Durch die Haltevorrichtung ist es möglich, das Druckbegrenzungsventil unabhängig von den anliegenden Drücken offen zu halten. Durch die Haltevorrichtung ist es möglich, ein Schließen des Druckbegrenzungsventil zu vermeiden. Die Haltevorrichtung ist insbesondere so eingerichtet, dass sie den Dichtkörper in der weiteren Position hält, wenn bei einem Fehler der Hochdruckpumpe eine hundertprozentige Vollförderung auftritt. Dies tritt beispielsweise auf, wenn am digitalen Einlassventil der Hochdruckpumpe die Feder gebrochen ist oder wenn das digitale Einlassventil elektrisch defekt ist. In diesen Fällen arbeitet die Hochdruckpumpe nur noch als Konstantpumpe in Abhängigkeit der Drehzahl. Aufgrund des sehr hohen Volumenstroms wird der Dichtkörper in diesem Fall sehr weit ausgelenkt. Insbesondere wird der Dichtkörper in diesem Fall mindestens die vorgegebene Distanz ausgelenkt. Im Normalbetrieb wird der Dichtkörper insbesondere weniger weit als die vorgegebene Distanz ausgelenkt. Wenn der Dichtkörper weniger weit als die vorgegebene Distanz ausgelenkt ist, wird der Dichtkörper nicht von der Haltevorrichtung gehalten. Im Normalbetrieb wird der Dichtkörper nicht von der Haltevorrichtung gehalten.

Die Haltevorrichtung hält den Dichtkörper im Fehlerfall der hundertprozentigen Pumpenförderung in der stark ausgelenkten Position. Somit wird eine Permanentleckage erzeugt. Das Druckbegrenzungsventil wird auch während des Saughubs der Hochdruckpumpe nicht mehr geschlossen. Somit ist es möglich, den Druck im Kraftstoffeinspritzsystem mittels des Druckbegrenzungsventils abzubauen, insbesondere auf den Druck, der von der Vorförderpumpe bereitgestellt wird. Somit ist auch im Fehlerfall der Systemdruck bekannt. Insbesondere liegt dieser bekannte Systemdruck zwischen 5 und 7 bar und entspricht dem Druck, der von der Vorförderpumpe bereitgestellt wird. Somit ist zumindest ein Einspritzen von Kraftstoff mit einem Versorgungsdruck von 5 bis 7 bar möglich. Dadurch ist eine ausreichende Menge an Kraftstoff einspritzbar, um zirka 20 bis 30 % der Motorvolllastleistung abrufen zu können. Somit ist zumindest ein Notbetrieb der Brennkraftmaschine verlässlich möglich. Die Einspritzventile können verlässlich öffnen.

Durch die Haltevorrichtung ist eine einfache und kostengünstige Möglichkeit geschaffen, einen Niederdrucknotbetrieb der Brennkraftmaschine zu ermöglichen, wenn der Fehlerfall der hundertprozentigen Vollförderung der Hochdruckpumpe auftritt. Dadurch wird vermieden, dass die Brennkraftmaschine in diesem Fehlerfall unmittelbar nach dem Fehlerfall abgestellt werden muss. Zudem können die Injektoren und die Steuerung zur Ansteuerung der Injektoren einfach ausgelegt und konstruiert werden. Es ist nicht notwendig, die Injektoren für hohe Drücke, beispielsweise über 350 bar, auszulegen.

Gemäß weiteren Ausführungsformen hält die Haltevorrichtung den Dichtkörper irreversibel in der weiteren Position. Der Dichtkörper verlässt die weitere Position nicht mehr. Da die Hochdruckpumpe jedoch sowieso einen Schaden aufweist, der zu dem Fehlerfall geführt hat, muss die Pumpe sowieso getauscht werden. Das irreversible Halten ermöglicht jedoch einen verlässlichen Druckabbau und vermeidet einen weiteren Druckaufbau.

Gemäß weiteren Ausführungsformen hält die Haltevorrichtung den Dichtkörper reversibel. Nachdem der Haltekörper von der Haltevorrichtung in der weiteren Position gehalten wurde, verlässt er die weitere Position wieder und wird beispielsweise durch eine Feder in die Schließposition gedrückt. Somit ist es möglich, auch bei einem Fehlerfall den Druck im Kraftstoffeinspritzsystem wieder über den Niederdruck der Vorförderpumpe zu erhöhen. Sobald wiederum der Druck so groß wird, dass der Ventilkörper bis zu der weiteren Position über die vorgegebene Distanz verschoben wird, wird der Dichtkörper von der Haltevorrichtung wiederum eine gewisse Zeitspanne gehalten, um einen verlässlichen Druckabbau zu realisieren.

Gemäß weiteren Ausführungsformen ist die Haltevorrichtung eingerichtet, den Dichtkörper magnetisch in der weiteren Position zu halten. Gemäß wiederum weiteren Ausführungsformen ist die Haltevorrichtung eingerichtet, den Dichtkörper mechanisch in der weiteren Position zu halten. Gemäß wiederum weiteren Ausführungsformen hält die Haltevorrichtung den Dichtkörper in einer anderen Art und Weise in der weiteren Position. Auch eine Kombination von verschiedenen Kräften ist möglich, um den Dichtkörper zu halten, beispielsweise eine Kombination von magnetischen Kräften und Reibungskräften.

Gemäß weiteren Ausführungsformen ist die vorgegebene Distanz in Abhängigkeit von einem maximal zulässigen Druck für das Kraftstoffeinspritzsystem vorgegeben. Je größer der maximal zulässige Druck für das Kraftstoffeinspritzsystem ist, desto größer wird die vorgegebene Distanz vorgegeben. Beispielsweise wird die vorgegebene Distanz so vorgegeben, dass die Haltevorrichtung den Dichtkörper in der weiteren Position hält, wenn in einer Kraftstoffsammelleitung ein Druck von 300 bar überschritten wird.

Gemäß einem weiteren Aspekt der Erfindung umfasst ein Kraftstoffeinspritzsystem ein Druckbegrenzungsventil gemäß zumindest einer der erläuterten Ausführungsformen. Das Kraftstoffeinspritzsystem weist eine Hochdruckpumpe mit einem Pumpenraum auf, der hydraulisch zwischen einem Hochdruckbereich und einem Niederdruckbereich angeordnet ist. Das Druckbegrenzungsventil ist mit dem Fluideinlass hydraulisch mit dem Hochdruckbereich verbunden. Gemäß Ausführungsformen ist der Fluidauslass des Druckbegrenzungsventils hydraulisch mit dem Pumpenraum verbunden. Somit ist das Druckbegrenzungsventil im Normalbetrieb hydraulisch verriegelt. Sobald jedoch die Haltevorrichtung den Dichtkörper in der weiteren Position hält, wird eine hydraulische Verriegelung durch die Haltevorrichtung verhindert und ein schneller und verlässlicher Druckabbau ist möglich.

Gemäß weiteren Ausführungsformen ist der Fluidauslass des Druckbegrenzungsventils mit dem Neiderdruckbereich verbunden. Somit ist ein Öffnen des Druckbegrenzungsventils auch während des Förderhubs der Hochdruckpumpe möglich.

Das Kraftstoffeinspritzsystem weist gemäß weiteren Ausführungsformen eine Kraftstoffsammelleitung (auch Common Rail genannt) auf, die hydraulisch mit dem Hochdruckbereich der Hochdruckpumpe gekoppelt ist. Die vorgegebene Distanz ist in Abhängigkeit von der Kraftstoffsammelleitung vorgegeben. Gemäß weiteren Ausführungsformen ist die vorgegebene Distanz von weiteren Elementen des Kraftstoffeinspritzsystems abhängig vorgegeben.

Weitere Vorteile, Merkmale und Weitebildungen ergeben sich aus den nachfolgenden in Verbindung mit den Figuren erläuterten Beispielen. Gleiche, gleichartige und gleich wirkende Elemente können dabei mit den gleichen Bezugszeichen versehen sein.

Es zeigen:
- Figur 1: eine schematische Darstellung eines Kraftstoffeinspritzsystems gemäß Ausführungsformen,
- Figur 2: eine schematische Darstellung eines Druckbegrenzungsventils in der Schließposition gemäß Ausführungsformen, und
- Figur 3: eine schematische Darstellung des Druckbegrenzungsventils in einer weiteren Position gemäß Ausführungsformen.

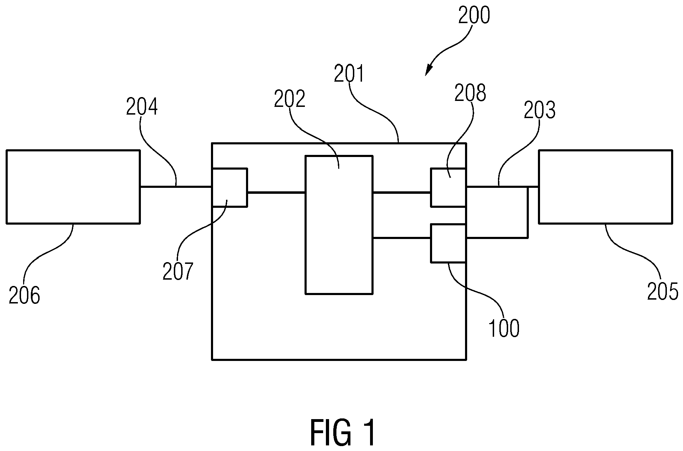

Figur 1 zeigt ein Kraftstoffeinspritzsystem 200. Das Kraftstoffeinspritzsystem 200 ist insbesondere ein Kraftstoffeinspritzsystem für eine Brennkraftmaschine für ein Kraftfahrzeug. Das Kraftstoffeinspritzsystem 200 weist eine Hochdruckpumpe 201 zur Förderung eines Fluids auf, insbesondere zur Förderung von Benzin oder Diesel. Das Kraftstoffeinspritzsystem 200 weist einen Fluidtank 206 und eine Kraftstoffsammelleitung 205 auf. Die Hochdruckpumpe 201 ist eingerichtet, Fluid aus dem Fluidtank 206 unter Beaufschlagung eines Drucks zu der Kraftstoffsammelleitung 205 zu fördern. Die Hochdruckpumpe 201 ist an einem Niederdruckbereich 204 mit dem Fluidtank 206 gekoppelt. Mit einem Hochdruckbereich 203 ist die Hochdruckpumpe 201 mit der Kraftstoffsammelleitung 205 gekoppelt. Die Kraftstoffsammelleitung 205 ist mit Einspritzventilen gekoppelt. Die Einspritzventile dienen zur Einspritzung des Fluids aus der Kraftstoffsammelleitung 205 in jeweils zugeordnete Brennräume der Brennkraftmaschine.

Die Hochdruckpumpe 201 weist einen Pumpenraum 202 auf. Der Pumpenraum 202 ist zwischen dem Niederdruck 204 und dem Hochdruckbereich 203 angeordnet. Beispielsweise ist die Hochdruckpumpe 201 eine Kolbenpumpe, bei der sich in dem Pumpenraum 202 ein Kolben hin und her bewegt, um das Fluid aus dem Fluidtank 206 anzusaugen und zu der Kraftstoffsammelleitung 205 zu fördern. Zwischen dem Fluidtank 206 und dem Pumpenraum 202 ist ein Einlassventil 207 angeordnet. Zwischen dem Pumpenraum 202 und der Kraftstoffsammelleitung 205 ist ein Auslassventil 208 angeordnet.

Hydraulisch parallel zu dem Auslassventil 208 ist gemäß Ausführungsformen ein Druckbegrenzungsventil 100 angeordnet. Gemäß weiteren Ausführungsformen ist das Druckbegrenzungsventil nicht wie in Figur 1 dargestellt ausgangsseitig mit dem Pumpenraum 202 hydraulisch gekoppelt, sondern direkt mit dem Niederdruckbereich 204. Das Druckbegrenzungsventil sichert den Hochdruckbereich und insbesondere die Kraftstoffsammelleitung 205 vor unzulässig hohen Drücken. Unzulässig hohe Drücke treten beispielsweise während eines fehlerhaften Betriebs der Hochdruckpumpe 201 auf. Beispielsweise kann ein defektes Einlassventil 207 zu unzulässig hohen Drücken im Hochdruckbereich 203 führen.

Das Einlassventil 207 ist insbesondere ein sogenanntes digitales Einlassventil, das auch während des Förderhubs der Hochdruckpumpe 201 offengehalten werden kann. Somit ist eine Teilförderung der Hochdruckpumpe 201 mit Förderkragen von unter 100 % realisierbar. Wenn beispielsweise am Einlassventil 207 die Feder gebrochen ist oder das Einlassventil 207 elektrisch defekt ist, ist ein Offenhalten des Einlassventils 207 während des Förderhubs der Hochdruckpumpe 201 nicht mehr möglich. Somit ist nur noch eine Vollförderung mit einem hundertprozentigen Fördergrad der Hochdruckpumpe 201 möglich.

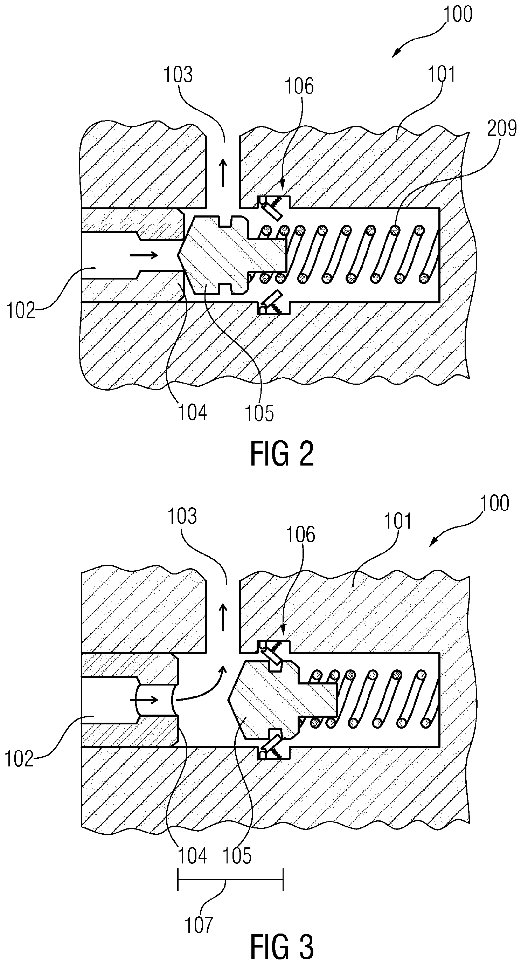

Figur 2 zeigt eine schematische Darstellung des Druckbegrenzungsventils 100 gemäß Ausführungsformen. Das Druckbegrenzungsventil 100 weist ein Gehäuse 101 auf. Beispielsweise ist das Gehäuse 101 das Pumpengehäuse der Hochdruckpumpe 201. Das Druckbegrenzungsventil 100 weist einen Fluideinlass 102 auf. Der Fluideinlass 102 ist insbesondere mit dem Hochdruckbereich 203 verbunden. Das Druckbegrenzungsventil 100 weist einen Fluidauslass 103 auf. Der Fluidauslass 103 ist gemäß Ausführungsformen mit dem Pumpenraum 202 hydraulisch verbunden. Gemäß weiteren Ausführungsformen ist der Fluidauslass 103 hydraulisch mit dem Niederdruckbereich 204 verbunden. Das Druckbegrenzungsventil 100 weist einen Dichtsitz 104 auf. Der Dichtsitz 104 wirkt mit einem Dichtkörper 105 des Druckbegrenzungsventils 100 zusammen. Beispielsweise wird der Dichtkörper 105 von einer Feder 209 in Richtung des Dichtsitzes 104 gedrückt. Wenn der Dichtkörper 105 in Kontakt mit dem Dichtsitz 104 ist, ist das Druckbegrenzungsventil 100 in seiner Schließposition. Ein Fluidfluss von dem Fluideinlass 102 zu dem Fluidauslass 103 ist verhindert. Der Dichtkörper 105 ist entgegen der Federkraft der Feder 209 von dem Dichtsitz 104 weg bewegbar. Wenn der Dichtkörper 105 in einem Abstand zu dem Dichtsitz 104 angeordnet ist, ist ein Fluidfluss von dem Fluideinlass 102 zu dem Fluidauslass 103 freigegeben. Wenn der Fluidfluss freigegeben ist, wird Fluid aus dem Hochdruckbereich 203 und insbesondere aus der Kraftstoffsammelleitung 205 abgeführt und somit der Druck im Hochdruckbereich 203 reduziert. Das Druckbegrenzungsventil 100 weist eine Haltevorrichtung 106 auf. Die Haltvorrichtung 106 ist eingerichtet, den Dichtkörper 105 in einer von der Schließposition unterschiedlichen Position beabstandet von dem Dichtsitz 104 unabhängig von den anliegenden Drücken zu fixieren.

In den Ausführungsformen, in denen der Fluidauslass 103 mit dem Pumpenraum 202 hydraulisch verbunden ist, ist das Druckbegrenzungsventil 100 hydraulisch verriegelt. Das Druckbegrenzungsventil 100 ist während des Förderhubs hydraulisch verriegelt. Der Öffnungsdruck des Druckbegrenzungsventils 100 ist so eingestellt, dass es bei Normalbetrieb der Brennkraftmaschine nicht öffnet. Somit wird ein guter Wirkungsgrad der Hochdruckpumpe 201 ermöglicht. Während der Saugphase der Hochdruckpumpe 201 ist es möglich, dass der Fluidfluss von dem Fluideinlass 102 zu dem Fluidauslass 103 freigegeben wird und somit der Druck im Hochdruckbereich 203 abgebaut wird. Im Normalbetrieb (beispielsweise während des so genannten heating up und/oder dem so genannten hot soak) wird der Dichtkörper 105 nur wenige Mikrometer von dem Dichtsitz 104 ausgelenkt, um den Überdruck abzubauen.

Bei einer Pumpenfeder, insbesondere wenn eine hundertprozentige Vollförderung auftritt, tritt ein sehr großer Volumenstrom auf. Der Volumenstrom führt zu einer größeren Auslenkung des Dichtkörpers 105 weg vom Dichtsitz 104 als im Normalbetrieb.

Figur 3 zeigt das Druckbegrenzungsventil 100 bei einem Fehlerfall der hundertprozentigen Vollförderung der Hochdruckpumpe 201. Durch den hohen Volumenstrom ist der Dichtkörper 105 eine vorgegebene Distanz 107 von dem Dichtsitz 104 weg bewegt worden. Somit ist der Dichtkörper 105 in den Wirkbereich der Haltevorrichtung 106 des Druckbegrenzungsventils 100 gelangt. Die Haltevorrichtung 106 ist eingerichtet, den Dichtkörper 105 zu halten und ein Zurückbewegen des Dichtkörpers 105 in Richtung des Dichtsitzes zu verhindern. Wenn der Dichtkörper 105 von der Haltevorrichtung 106 gehalten wird, wird die Schließposition des Druckbegrenzungsventils 100 vermieden. Der Fluidfluss von dem Fluideinlass 102 zu dem Fluidauslass 103 ist somit stets freigegeben, insbesondere auch während des Förderhubs der Hochdruckpumpe 201. Die Haltevorrichtung 201 hält den Dichtkörper wie in der Figur 3 dargestellt beispielsweise mechanisch. Die Verbindungshalbleiterschicht 106 weist dazu beispielsweise elastisch auslenkbare Hebel auf, die in eine Nut des Dichtkörpers 105 eingreifen, um diesen zu halten. Gemäß weiteren Ausführungsformen weist die Haltevorrichtung 106 magnetische Halteelemente auf, um den Dichtkörper 105 mittels magnetischer Kräfte beabstandet zu dem Dichtsitz 104 zu halten. Gemäß weiterer Ausführungsformen weist die Haltevorrichtung 106 andere Elemente auf, um den Dichtkörper 105 mittels anderer Kräfte beabstandet zu dem Dichtsitz 104 zu halten. Auch eine Kombination von verschiedenen Haltekräften ist möglich.

Durch die Haltevorrichtung 106 wird der Dichtkörper 105 beim Eintreten des Pumpenfehlerfalls der hundertprozentigen Pumpenförderung in der stark ausgelenkten Position fixiert. Durch die Fixierung wird eine Permanentleckage erzeugt. Das Druckbegrenzungsventil 100 kann auch während des Förderhubs der Hochdruckpumpe 201 nicht mehr geschlossen werden. Dadurch baut sich der Druck im Hochdruckbereich 203 sehr schnell ab, insbesondere auf den Druck, der von einer Vorförderpumpe, die beispielsweise im Fluidtank 206 angeordnet ist, bereitgestellt wird. Somit liegt auch bei dem Pumpenfehlerfall der hundertprozentigen Vollförderung ein definierter Zustand vor, mit dem das Kraftstoffeinspritzsystem 200 und die Brennkraftmaschine betrieben werden kann. Es ist bekannt, welche Kraftstoffmenge eingespritzt wird. Dadurch kann beispielsweise eine Zerstörung des Katalysators verhindert werden. Ein verlässliches Öffnen der Injektoren ist möglich. Zudem kann auf einen Hochdrucksensor, der auch bei Drücken von über 300 bar verlässliche Messwerte ermitteln kann, verzichtet werden. Durch den Betrieb mit dem Systemdruck der Vorförderpumpe von zirka 5 bis 7 bar ist ein Betrieb der Brennkraftmaschine im Bereich von zirka 20 bis 30 % der Volllastleistung möglich. Somit ist es möglich, auch im Pumpenfehlerfall beispielsweise bis zu einer Werkstatt zu fahren. Somit ist die Verfügbarkeit des Kraftfahrzeugs erweitert.

Bei herkömmlichen Druckbegrenzungsventilen ohne Haltevorrichtung ist es im Pumpenfehlerfall der hundertprozentigen Vollförderung auf Grund der sehr hohen Drücke in der Kraftstoffsammelleitung nicht möglich, den Druck dauerhaft auf den Systemdruck der Vorförderpumpe von zirka 5 bis 7 bar zu reduzieren und zu halten. Daher muss das Kraftfahrzeug im Fehlerfall herkömmlich abgestellt werden. Ein Notbetrieb ist nicht möglich.

Die vorgegebene Distanz 107 wird abhängig von den Komponenten des Kraftstoffeinspritzsystems 200 festgelegt. Ab welcher ausgelenkten Position der Dichtkörper 105 von der Haltevorrichtung 106 fixiert wird, wird insbesondere in Abhängigkeit von einem maximal zulässigen Druck im Hochdruckbereich 203 und/oder in der Kraftstoffsammelleitung 205 vorgegeben. Beispielsweise wird die vorgegebene Distanz 107 so vorgegeben, dass der Dichtkörper 105 bei einem Druck von 300 bar oder mehr in der Kraftstoffsammelleitung 205 so weit ausgelenkt wird, dass er von der Haltevorrichtung 106 gehalten wird.

Im Normalbetrieb sind beispielsweise Drücke von etwa 200 bar vorgesehen. Gemäß weiteren Ausführungsformen wird der Dichtkörper 105 bei anderen Drücken in der Kraftstoffsammelleitung 205 von der Haltevorrichtung 106 gehalten, beispielsweise bei einem Druck von 250 bar in der Kraftstoffsammelleitung 205, wenn im Normalbetrieb Drücke von etwa 150 bar vorgesehen sind.

Dadurch, dass die Haltevorrichtung 106 den Dichtkörper 105 über einen längeren Zeitraum insbesondere auch während des Förderhubs der Hochdruckpumpe 201 hält, ist eine Trägheit des Druckbegrenzungsventils 100, insbesondere des Dichtkörpers 105, für den Druckabbau auf der Hochdruckseite 203 nicht mehr relevant. Diese Trägheit führt bei herkömmlichen Ventilen ohne die Haltevorrichtung 106 dazu, dass auch im Fehlerfall während des Förderhubs stets zumindest eine kleine Menge Fluid gefördert wird, da das Druckbegrenzungsventil 100 herkömmlich träger als das Einlassventil ist. Dadurch wird während der Saugphase eine kleine Menge Fluid durch das Einlassventil eingesaugt, während das Druckbegrenzungsventil 100 geschlossen ist. Während des Förderhubs ist herkömmlich dann das Druckbegrenzungsventil 100 hydraulisch verriegelt, sodass kein Druckabbau stattfinden kann.

Das Druckbegrenzungsventil 100 weist die Haltevorrichtung 106 auf. Diese hält das Druckbegrenzungsventil 100 stets in der geöffneten Position, wenn der Fehlerfall der hundertprozentigen Pumpenlieferung auftritt. Somit ist auch im Fehlerfall ein Betrieb der Brennkraftmaschine möglich. Dadurch, dass Drücke oberhalb des vorgegebenen Öffnungsdrucks des Druckbegrenzungsventils 100 vermieden werden, kann auf teuere Hochdruckbauteile verzichtet werden. Das Druckbegrenzungsventil 100 ist einfach und kostengünstig realisierbar. Es wird ein Betrieb vermieden, in dem keine aktuellen Druckinformationen vorliegen. Dadurch werden falsche und/oder zu hohe Einspritzmengen vermieden.

Gemäß weiterer Ausführungsformen ist die vorgegebene Distanz 107 so vorgegeben, dass die Haltevorrichtung auch bei anderen Fehlerfällen der Hochdruckpumpe 201 den Dichtkörper 105 hält. Beispielsweise hält die Haltevorrichtung 106 den Dichtkörper 105 bereits bei einer 99 %-igen Pumpenlieferung der Hochdruckpumpe 201.

## Patentansprüche

1. Druckbegrenzungsventil für ein Kraftstoffeinspritzsystem (200), umfassend:
- ein Gehäuse (101) mit einem Fluideinlass (102) und einem Fluidauslass (103),
- einen Dichtsitz (104) und einen Dichtkörper (105), um einen Fluidfluss vom Fluideinlass (102) zum Fluidauslass (103) in einer Schließposition zu sperren, in der der Dichtkörper (105) in Kontakt mit dem Dichtsitz (104) ist, und in weiteren Positionen freizugeben,
- eine Haltevorrichtung (106), um den Dichtkörper (105) in einer der weiteren Positionen dauerhaft und unabhängig von den anliegenden Drücken offen zu halten und den Fluidfluss vom Fluideinlass (102) zum Fluidauslass (103) dauerhaft freizugeben, wenn der Dichtkörper (105) mindestens eine vorgegebene Distanz (107) von dem Dichtsitz (104) weg verschoben ist.

2. Druckbegrenzungsventil nach Anspruch 1, bei dem die Haltevorrichtung (106) den Dichtkörper (105) irreversibel in der weiteren Position hält.

3. Druckbegrenzungsventil nach Anspruch 1, bei dem die Haltevorrichtung (106) den Dichtkörper (105) reversibel in der weiteren Position hält.

4. Druckbegrenzungsventil nach einem der Ansprüche 1 bis 3, bei dem die Haltevorrichtung (106) eingerichtet ist, den Dichtkörper (105) magnetisch in der weiteren Position zu halten.

5. Druckbegrenzungsventil nach einem der Ansprüche 1 bis 4, bei dem die Haltevorrichtung (106) eingerichtet ist, den Dichtkörper (105) mechanisch in der weiteren Position zu halten.

6. Druckbegrenzungsventil nach einem der Ansprüche 1 bis 5, bei dem die vorgegebene Distanz (107) in Abhängigkeit von einem maximal zulässigen Druck für das Kraftstoffeinspritzsystem (200) vorgegebenen ist.

7. Kraftstoffeinspritzsystem, umfassend:
- ein Druckbegrenzungsventil (100) nach einem der Ansprüche 1 bis 6,
- eine Hochdruckpumpe (201) mit einem Pumpenraum (202), der hydraulisch zwischen einem Hochdruckbereich (203) und einem Niederdruckbereich (204) angeordnet ist, wobei das Druckbegrenzungsventil (100) mit dem Fluideinlass (102) hydraulisch mit dem Hochdruckbereich (203) verbunden ist.

8. Kraftstoffeinspritzsystem nach Anspruch 7, bei dem der Fluidauslass (103) des Druckbegrenzungsventils (100) hydraulisch mit dem Pumpenraum (202) verbunden ist.

9. Kraftstoffeinspritzsystem nach Anspruch 7, bei dem der Fluidauslass (103) des Druckbegrenzungsventils (100) hydraulisch mit dem Niederdruckbereich (204) verbunden ist.

## Claims

1. Pressure-limiting valve for a fuel injection system (200) comprising:
- a housing (101) which has a fluid inlet (102) and a fluid outlet (103),
- a sealing seat (104) and a sealing body (105) for blocking a fluid flow from the fluid inlet (102) to the fluid outlet (103) in a closed position in which the sealing body (105) is in contact with the sealing seat (104) and for permitting said fluid flow in additional positions,
- a holding device (106) for keeping the sealing body (105) open in one of the additional positions permanently and irrespective of the prevailing pressures and for permanently permitting the fluid flow from the fluid inlet (102) to the fluid outlet (103) if the sealing body (105) is moved at least a specified distance (107) away from the sealing seat (104).

2. Pressure-limiting valve according to Claim 1, in which the holding device (106) holds the sealing body (105) irreversibly in the additional position.

3. Pressure-limiting valve according to Claim 1, in which the holding device (106) holds the sealing body (105) reversibly in the additional position.

4. Pressure-limiting valve according to one of Claims 1 to 3, in which the holding device (106) is designed to hold the sealing body (105) magnetically in the additional position.

5. Pressure-limiting valve according to one of Claims 1 to 4, in which the holding device (106) is designed to hold the sealing body (105) mechanically in the additional position.

6. Pressure-limiting valve according to one of Claims 1 to 5, in which the specified distance (107) is predetermined as a function of a maximum admissible pressure for the fuel injection system (200).

7. Fuel injection system, comprising:
- a pressure limiting valve (100) according to one of Claims 1 to 6,
- a high pressure pump (201) having a pump chamber (202) which is arranged hydraulically between a high pressure region (203) and a low pressure region (204), wherein the pressure-limiting valve (100) is connected hydraulically to the high pressure region (203) by the fluid inlet (102).

8. Fuel injection system according to Claim 7, in which the fluid outlet (103) of the pressure-limiting valve (100) is hydraulically connected to the pump chamber (202).

9. Fuel injection system according to Claim 7, in which the fluid outlet (103) of the pressure limiting valve (100) is connected hydraulically to the low pressure region (204).

## Revendications

1. Soupape de limitation de pression pour un système d'injection de carburant (200), comprenant:
- un boîtier (101) avec une entrée de fluide (102) et une sortie de fluide (103),
- un siège étanche (104) et un corps d'étanchéité (105), pour arrêter un écoulement de fluide de l'entrée de fluide (102) vers la sortie de fluide (103) dans une position de fermeture, dans laquelle le corps d'étanchéité (105) est en contact avec le siège étanche (104), et le libérer dans d'autres positions,
- un dispositif de retenue (106), destiné à maintenir le corps d'étanchéité (105) ouvert dans une des autres positions durablement et indépendamment des pressions appliquées et à libérer l'écoulement de fluide durablement de l'entrée de fluide (102) vers la sortie de fluide (103) lorsque le corps d'étanchéité (105) est écarté d'au moins une distance prédéterminée (107) du siège étanche (104).

2. Soupape de limitation de pression selon la revendication 1, dans laquelle le dispositif de retenue (106) retient le corps d'étanchéité (105) de façon irréversible dans l'autre position.

3. Soupape de limitation de pression selon la revendication 1, dans laquelle le dispositif de retenue (106) retient le corps d'étanchéité (105) de façon réversible dans l'autre position.

4. Soupape de limitation de pression selon l'une quelconque des revendications 1 à 3, dans laquelle le dispositif de retenue (106) est conçu pour retenir le corps d'étanchéité (105) de façon magnétique dans l'autre position.

5. Soupape de limitation de pression selon l'une quelconque des revendications 1 à 4, dans laquelle le dispositif de retenue (106) est conçu pour retenir le corps d'étanchéité (105) de façon mécanique dans l'autre position.

6. Soupape de limitation de pression selon l'une quelconque des revendications 1 à 5, dans laquelle la distance prédéterminée (107) est prédéterminée en fonction d'une pression maximale admissible pour le système d'injection de carburant (200).

7. Système d'injection de carburant, comprenant:
- une soupape de limitation de pression (100) selon l'une quelconque des revendications 1 à 6,
- une pompe à haute pression (201) avec une chambre de pompe (202), qui est agencée hydrauliquement entre une zone à haute pression (203) et une zone à basse pression (204), dans lequel la soupape de limitation de pression (100) est raccordée hydrauliquement à la zone à haute pression (203) par l'entrée de fluide (102).

8. Système d'injection de carburant selon la revendication 7, dans lequel la sortie de fluide (103) de la soupape de limitation de pression (100) est raccordée hydrauliquement à la chambre de pompe (202).

9. Système d'injection de carburant selon la revendication 7, dans lequel la sortie de fluide (103) de la soupape de limitation de pression (100) est raccordée hydrauliquement à la zone à basse pression (204).
